# EUROPEAN PATENT SPECIFICATION

(11) **EP 2 790 300 B1**
(45) Date of publication and mention of the grant of the patent: **09.11.2016**
(21) Application number: 14163788.4
(22) Date of filing: 08.04.2014
(51) Int. Cl.: H02K 5/04, H02K 5/02

(54) **Electric Motor**
Elektromotor
Moteur électrique

(30) Priority: 12.04.2013 KR 20130040469
(43) Date of publication of application: 15.10.2014
(73) Proprietor: LG Electronics Inc., Yeongdeungpo-gu Seoul 150-721 (KR)
(72) Inventor: Park, Junghyun, 153-802 Seoul (KR); Kim, Jaeho, 153-802 Seoul (KR); Lee, Changyoun, 153-802 Seoul (KR); Kim, Gugyong, 153-802 Seoul (KR); Kim, Sangkook, 153-802 Seoul (KR); Yim, Youjin, 153-802 Seoul (KR); Oey, Agustinus, 40164 Bandung (ID)
(74) Representative: Vossius & Partner Patentanwälte Rechtsanwälte mbB

(56) References cited:
- EP-A1- 1 601 085
- DE-A1-102011 084 296
- JP-A- 2009 201 235
- US-A1- 2009 212 649

## Description

This specification relates to an electric motor, and particularly, to an electric motor, capable of preventing separation or spacing between components due to a temperature change.

As usually known, an electric motor is a device for converting electric energy into mechanical energy.

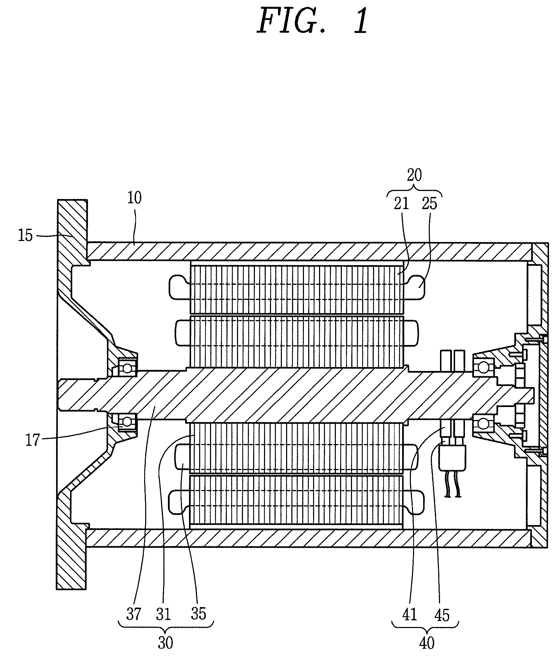

FIG. 1 is a sectional view of an electric motor according to the related art.

As illustrated in FIG. 1, an electric motor may include a frame 10, a stator 20 disposed within the frame 10, and a rotor 30 disposed to be rotatable with respect to the stator 20.

The frame 20 may have a cylindrical shape with both sides open.

Brackets 15 may be coupled to both end portions of the frame 10, respectively.

The stator 20 may include a stator core 21 having a rotor accommodating space, in which the rotor 30 is rotatably accommodated with a predetermined air gap, and a stator coil 25 wound on the stator core 21.

The rotor 30 may be accommodated within the stator 20 to be rotatable centering on a shaft 37.

The rotor 30 may include a rotor core 31, and a rotor coil 35 wound on the rotor core 31.

A power supply unit 40 for supplying excited power to the rotor coil 35 may be disposed on the shaft 37 of the rotor 30.

The power supply unit 40 may be provided with slip rings 41, and brushes 45 contactable with the slip rings 41 such that a current can flow therealong.

The shaft 37 of the rotor 30 may be rotatably supported by bearings 70.

The bearings 17 may be provided on the brackets 15, respectively.

Meanwhile, the stator core 21 may be formed by stacking circular electric steel sheets in an insulating manner.

The stator core 21 may be press-fit into the frame 10 so as to increase a coupling force with the frame 10.

However, in the related art electric motor, the stator core 21 has to be press-fit into the frame 10. Here, when the frame 10 is formed of a material with a greater thermal-deformation value than a material forming the stator core 21 and temperatures of the frame and the stator 20 are increased, the frame 10 and the stator core 21 are thermally deformed with different thermal-deformation values. This may reduce the coupling force between the frame 10 and the stator 20. Accordingly, an air gap between the stator 20 and the rotor 30 may be changed, and thus a performance (or reliability) of the electric motor may be lowered.

JP2009201235A discloses an electric motor according to the preamble of claim 1.

Therefore, an aspect of the detailed description is to provide an electric motor, capable of enhancing a coupling force between a frame and a stator, irrespective of a temperature change.

Another aspect of the detailed description is to provide an electric motor, capable of preventing a bad influence due to electromagnetic waves.

Another aspect of the detailed description is to provide an electric motor, capable of stably maintaining an air gap between a stator and a rotor.

To achieve these and other advantages and in accordance with the purpose of this specification, as embodied and broadly described herein, there is provided an electric motor, comprising: a frame; a stator provided with a stator core inserted into the frame in a contacted or coupled manner, and a stator coil; and a rotor rotatably disposed to be rotatable with respect to the stator, wherein the frame and the stator core have different thermal expansion coefficients from each other, and the frame has a smaller specific gravity and a greater thermal deformation value than the stator core, wherein an anti-separation unit is provided between the frame and the stator core to prevent the frame and the stator core from being spaced or separated from each other due to different levels of thermal deformation upon a temperature change, wherein the anti-separation unit includes: a protruding part provided with anti-circumferential separation portions, and a coupling part formed on the stator core to be coupled to an outside or an inside of the protruding part; and wherein the frame includes a plurality of arcuate bases which are spaced to be arranged at predetermined intervals on the same circumference and have a cylindrical shape, the anti-circumferential separation portions extend in a radial direction from ends of the bases adjacent to each other, respectively and are spaced along a circumferential direction to form buffer space therebetween, and the anti-separation unit includes a connecting portion being spaced along the circumferential direction and connecting ends of the two adjacent anti-circumferential separation portions along the circumferential direction.

Here, the frame may include a plurality of arcuate bases arranged along the same circumference with preset intervals. The anti-separation unit may include a protruding part provided with anti-circumferential separation portions extending in a radial direction from ends of the bases adjacent to each other, respectively, and a connecting portion connecting the two adjacent anti-circumferential separation portions.

Each of the anti-circumferential separation portions of the anti-separation unit may be inclined in a radial direction to have an increased width along a protruding direction, or formed to have a uniform width.

The protruding part may protrude from the frame inwardly or outwardly. The coupling part for accommodating the protruding part therein may be formed on the stator core when the protruding part inwardly protrudes from the frame. The coupling part may be formed in such a manner that a part of the stator core is inserted into the protruding part when the protruding part outwardly protrudes from the frame.

The coupling part and the protruding part may be prevented from being spaced from each other in a manner that the anti-circumferential separation portions come in contact with the coupling part of the stator upon a thermal expansion, and in a manner that the connecting portion of the protruding part comes in contact with the coupling part of the stator upon a thermal contraction.

The stator core and the frame may be fixed to each other by a contact between the coupling part and the protruding part and a contact between an inner surface of the base and a part of an outer surface of the stator core. A contact area between the protruding part and the coupling part may be increased to be greater than a contact area between the inner surface of the base and the outer surface of the stator core when a temperature of the stator is increased over a predetermined temperature. The contact area between the protruding part and the coupling part may be decreased to be smaller than the contact area between the inner surface of the base and the outer surface of the stator core when a temperature of the stator is decreased below a predetermined temperature.

The frame may include a plurality of ribs protruding from an outer surface of the base and extending along a lengthwise direction of the frame. Each rib may be formed in a manner that a height of a central portion thereof is lower than those of both sides thereof so as to prevent an outward deformation.

Buffering spaces may be formed within the protruding part, and each of the ribs may extend from each anti-circumferential separation portion of the protruding part.

Each of the ribs may be formed in the range of being greater than a thickness of the frame and smaller than three times of the thickness.

The protruding part may be provided by at lease two, and the number of the protruding part may be smaller than a half (D*π/Wg*2) of a value (D*π/Wg), which is obtained by dividing a circumference (D*π) of the frame by a maximum width Wg of the protruding part.

A height Hg of the protruding part may be the same as a multiplied value (Hg=Ft*Hf) of a thickness Ft of the base of the frame and a height factor Hf of the protruding part, and the height factor may be set within the range of 0.5 to 5.0.

The coupling part of the stator may be formed on a position with a minimized interference by a magnetic field when the protruding part is formed inwardly to be inserted into the coupling part of the stator.

The frame may have a length longer than a stacked thickness of the stator core. A guide portion may be formed on an inner surface of the frame in a manner that a protruding height thereof is gradually reduced toward both end portions of the stator core.

The anti-circumferential separation portions of the protruding part may be formed to be inclined or curved with respect to a rotation direction or a counter-rotation direction, and the coupling part may be formed to be contactable with the anti-circumferential separation portions in a surface-to-surface contact manner.

Brackets may be coupled to both end portions of the frame, respectively. At least one stator supporter may protrude from at least one of the brackets, to come in contact with an end portion of the stator core. One side of the stator core may be supported by the stator supporter and the other side thereof may be supported by a bolt such that the stator core is fixed to an inner side of the frame.

Brackets may be coupled to both end portions of the frame, respectively. At least one stator supporter may be provided between at least one of the brackets and the stator core to support one side of the stator core, and a bolt may be inserted through the bracket and the stator core to support the other side of the stator core.

The brackets may be coupled to both end portions of the frame, respectively. A stator supporter may be formed by inwardly protruding from a part of an inner surface of the frame in a stepped manner. One side of the stator core may be mounted on the stator supporter, and the other side of the stator core may be supported by a bolt to be pressed toward the stator supporter.

The frame may be formed of synthetic resin, and at least one conductive layer with a predetermined thickness may be formed on an inner surface and/or an outer surface of the frame.

The conductive layer may have a thickness in the range of 10 nm to 3 mm.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a sectional view of an electric motor according to the related art;
FIG. 2 is a sectional view of an electric motor in accordance with one exemplary embodiment disclosed herein;
FIG. 3 is a sectional view illustrating a coupled state between a frame and a stator core illustrated in FIG. 2;
FIG. 4 is an enlarged view of a frame of FIG. 2;
FIG. 5 is an enlarged view of a rib of FIG. 4;
FIG. 6 is an enlarged view of a protruding part and a coupling part of FIG. 3;

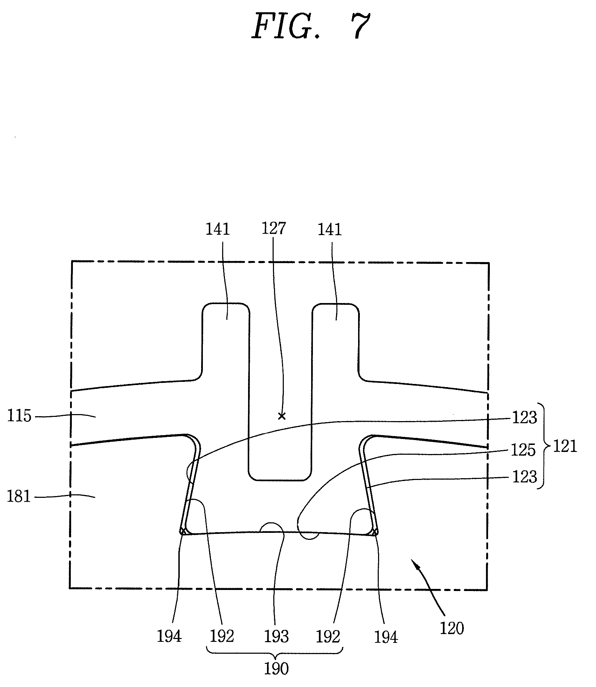

FIG. 7 is a view illustrating an operation of FIG. 6;
FIG. 8 is an exemplary view illustrating a variation of a stator supporter of FIG. 2;
FIG. 9 is an exemplary view illustrating another variation of the stator supporter of FIG. 2;
FIG. 10 is a view illustrating a position of a coupling part of FIG. 3;
FIG. 11 is an exemplary view illustrating a variation of a protruding part and a coupling part of FIG. 2;
FIG. 12 is a view illustrating an operation of FIG. 11;
FIG. 13 is a sectional view illustrating a coupled state between a frame and a stator core of an electric motor in accordance with another exemplary embodiment disclosed herein;
FIG. 14 is a view illustrating an operation of FIG. 13;
FIG. 15 is a sectional view illustrating a coupled state between a frame and a stator core of an electric motor in accordance with another exemplary embodiment disclosed herein; and
FIG. 16 is a view illustrating an operation of FIG. 13.

Description will now be given in detail of the exemplary embodiments, with reference to the accompanying drawings.

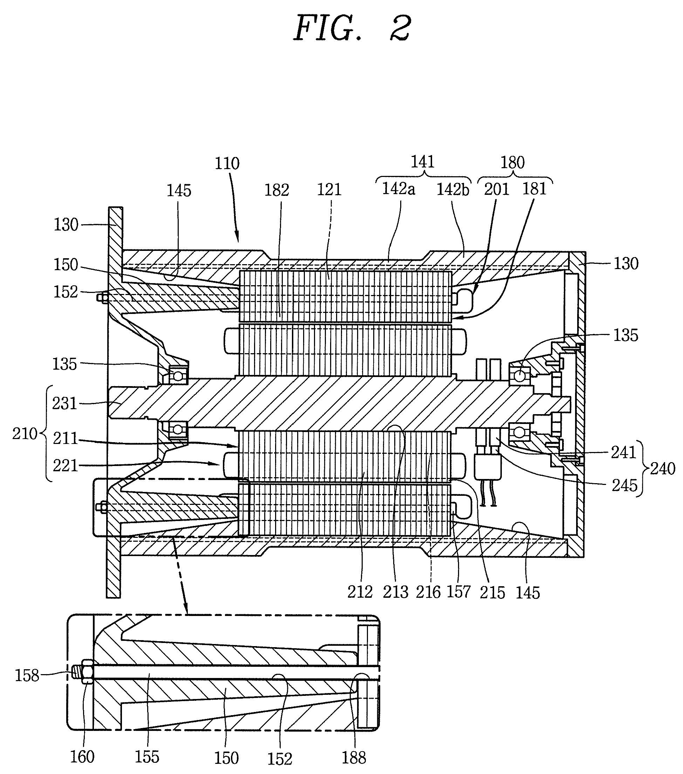

As illustrated in FIG. 2, an electric motor in accordance with one exemplary embodiment disclosed herein may include a frame 110, a stator 180 provided with a stator core 181 inserted into the frame 110 in a contacted or coupled state, and a stator coil 201, and a rotor 210 disposed to be rotatable with respect to the stator 180. The frame 110 and the stator core 181 have different thermal expansion coefficients from each other. The frame 110 has a relatively smaller specific gravity and a greater thermal-deformation value than the stator core 181. An anti-separation unit 120 may be disposed between the frame 110 and the stator core 181 to prevent spacing or separation between the frame 110 and the stator core 181 due to different levels of thermal deformation caused by a change of temperature.

The frame 110 may be provided with an accommodating space therein.

The frame 110, for example, may have at least one side open.

The frame 110, for example, may have both sides open.

Covers or brackets 130 (hereinafter, referred to as 'brackets') for closing the openings of the frame 110 may be provided on open end portions of the frame 110, respectively.

The brackets 130 may be detachably coupled to the frame 110.

The stator 180 may be provided within the frame 110.

The stator 180 includes a stator core 181 having a plurality of slots 185, and a stator coil 201 wound on the stator core 181 using the slots 185.

The stator core 181, for example, may be formed by stacking electric steel sheets 182 each having the plurality of slots 185 in an insulating manner.

In more detail, each electric steel sheet 182 of the stator core 181 may have a rotor accommodating space 184 formed through its central portion such that the rotor 210 can be rotatably accommodated therein.

Each electric steel sheet of the stator core 181 may be provided with a plurality of slots 185 and teeth 186.

The rotor 210, for example, may include a rotor core 211, and a shaft 231 coupled to a center of the rotor core 211.

The rotor 210, for example, may be provided with a rotor core 211 having a plurality of poles 215, and a rotor coil 221 wound on the rotor core 211.

The rotor core 211 may be formed by stacking a plurality of steel sheets 212 in an insulating manner.

Each electric steel sheet 212 of the rotor 210 may be provided with a shaft hole 213 formed through its central portion, and the poles 215 and slots 216 may be provided on a circumference of the shaft hole 213.

Here, although not illustrated, the rotor 210 may be configured in such a manner of including a rotor core having a flux barrier, or in such a manner of including a rotor core, and a permanent magnet, which is inserted into the rotor core (IPM type) or attached onto an outer surface of the rotor core (SPM type).

The shaft 231 may be provided with a power supply unit 240 supplying excited power to the rotor coil 221.

The power supply unit 240, for example, may include slip rings 241 coupled to the shaft 231, and brushes 245 contactable with the slip ring 241 such that a current can flow.

The shaft 231 may be rotatably supported by bearings 135.

The bearings 135, for example, may be provided on the brackets 130, respectively.

The frame 110 may be longer in length than the stator 180 in an axial direction.

At least one stator supporter 150 for supporting the stator 180 may be disposed within the frame 110.

For example, the stator supporter 150 may be formed on at least one of the brackets 130.

In more detail, the stator supporter 150 may protrude from an inner surface of the at least one of the brackets 130.

A coupling member inserting portion 152 in which a coupling member 155 is inserted through the stator 180 may be formed in the stator supporter 150.

A coupling member insertion hole 188 in which the coupling member 155 is inserted may be formed through the stator 180.

The coupling member insertion hole 188 of the stator 180 may formed through the stator core 181 in an axial direction.

The coupling member 155 may be drawn out of the bracket 130 sequentially through the coupling member insertion hole 188 of the stator 180 and the coupling member inserting portion 152 of the stator supporter 150.

The coupling member 155, for example, may be implemented as a bolt, which includes a head portion 157 formed at one end portion thereof, and a male screw portion 158 formed at the other end portion.

A nut 160 may be screwed into the male screw portion 158 of the coupling member 155, which is drawn out of the bracket 130.

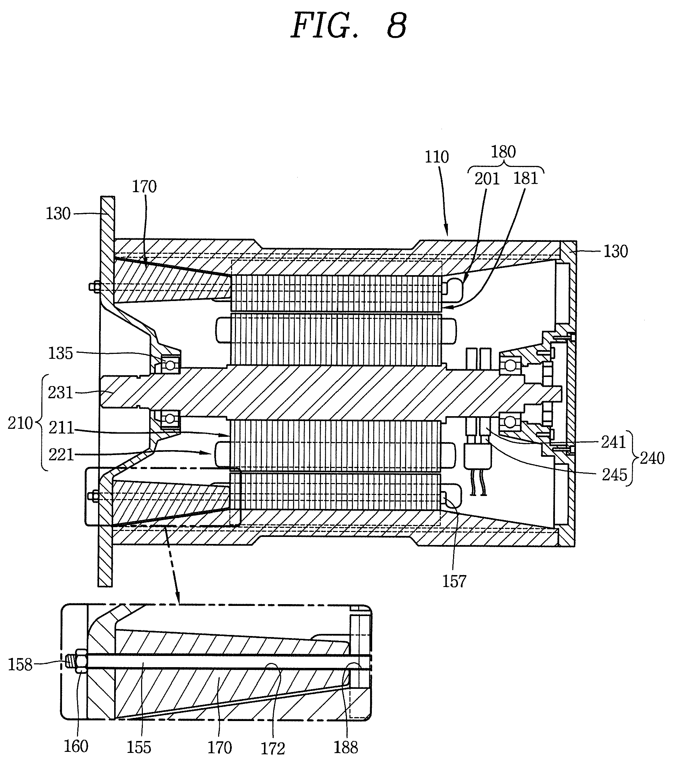

On the other hand, a stator supporter 170, for example, may be configured to be inserted between the frame 110 and the stator core 181, as illustrated in FIG. 8. Accordingly, one side of the stator core 181 may be supported by the stator supporter 170.

That is, the stator supporter 170 may be formed, independent of the bracket 130 and the stator core 181, so as to be interposed between the bracket 130 and the stator 180. Here, the stator supporter 170 disposed at one side of the stator 180 may be one or plural in number.

The stator supporter 170 may be provided with a coupling member insertion hole 172 formed therethrough such that the coupling member 155 coupled through the stator core 181 can be inserted therethrough. Accordingly, the other side of the stator core 181 can be supported by the head portion 157 of the coupling member 155. With the configuration, the coupling member 155 may be inserted sequentially through the stator core 181 and the stator supporter 170, and the nut 160 may be screwed into the male screw portion 158 of the coupling member 155 which is drawn out of the bracket 130. Accordingly, the one side of the stator core 181 may be supported by the stator supporter 170, and the other side thereof may be supported by the head portion 157 of the coupling member 155. Consequently, the stator core 181 may be stably supported both in a radial direction and in an axial direction.

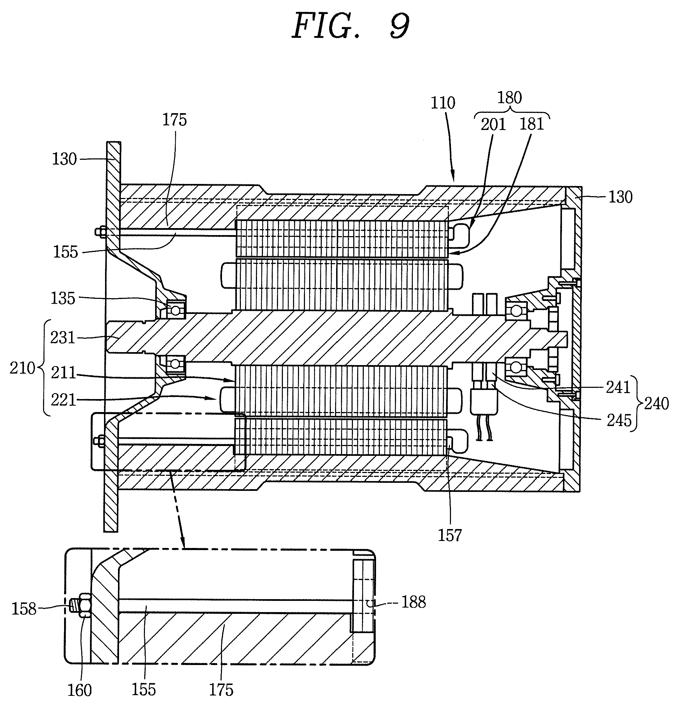

Also, as illustrated in FIG. 9, a stator supporter 175 may be formed in a manner of protruding from an inner surface of the frame 110 in a stepped manner such that one end portion of the stator core 181 can be mounted thereto.

The stator supporter 175 may protrude from the inner surface of the frame 110 in a radial direction at one side of the stator core 181 in a stepped manner. This may allow one end portion of the stator core 181 to be contactable with and supported by the stator supporter 175 along an axial direction.

The stator core 181 may be provided with a coupling member insertion hole 188 for insertion of the coupling member 155, by which the stator core 181 is pressed toward the stator supporter 175.

The coupling member 155 may be implemented as a bolt having a head portion 157 and a male screw portion 158.

With the configuration, one side of the stator core 181 may be mounted onto the stator supporter 175 and the coupling member 155 may be inserted through the coupling member insertion hole 188 of the stator core 181. The nut 160 may be coupled to the male screw portion 158 of the coupling member 155, which is drawn out of the bracket 130. Accordingly, the one side of the stator core 181 can be supported by the stator supporter 175 and the other side thereof by the head portion 157 of the coupling member 155. This may allow the stator core 181 to be stably supported both in a radial direction and in an axial direction.

On the other hand, the frame 110 is formed of a material (for example, plastic, reinforced plastic, synthetic resin, a light metal, a light alloy, etc.) having a smaller specific gravity (weight) than the stator core 181. This may result in a reduction of a weight of the frame 110 and an entire weight of the electric motor, implementing the electric motor which is light in weight.

The frame 110, for example, may be formed of a non-metallic lightweight member (material) (for example, plastic, reinforced plastic, synthetic resin, etc.).

When the frame 110 is made of a non-metallic material, at least one conductive layer 116 with a preset thickness may be formed on an inner and/or outer surface(s) of the frame 110.

The conductive layer 116 may be earthed such that electromagnetic waves can flow to the ground. Accordingly, the electromagnetic waves generated within the motor may be absorbed or shielded and flowed to the ground, so as to enhance electromagnetic interference (EMI) of electromagnetic compatibilities. In addition, external electromagnetic waves can be prevented from permeating into the motor, so as to enhance electromagnetic susceptibility (EMS).

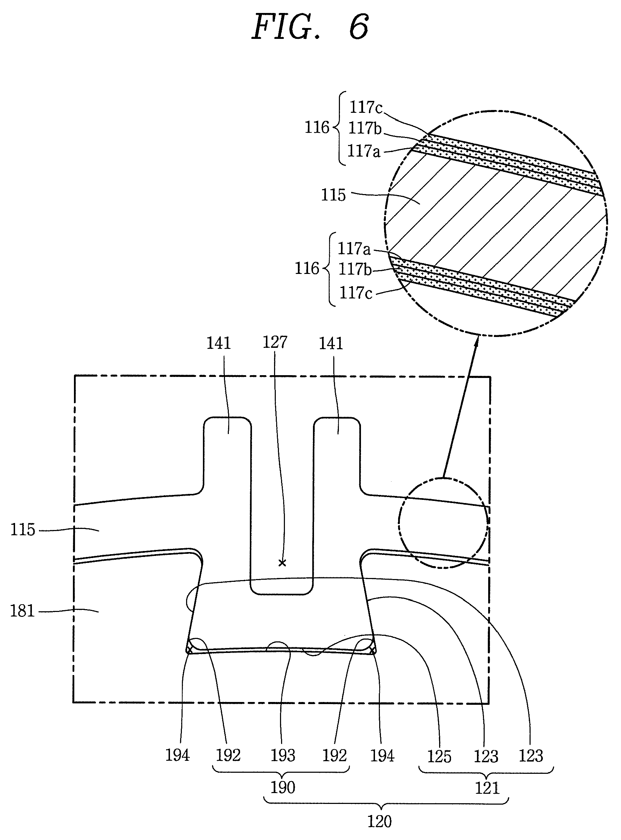

The conductive layer 116, for example, may be formed on both the inner surface and the outer surface of the frame 110, as illustrated in an enlarged view of FIG. 6.

Each conductive layer 116, for example, may have a thickness in the range of 10 nm to 3 mm.

Each conductive layer 116, for example, may be provided with a plurality of layers formed of different conductors.

In more detail, each conductive layer 116 may be implemented by including a first layer 117a coming in contact with the frame 110, a second layer 117b formed on an outer surface of the first layer 117a, and a third layer 117c formed on an outer surface of the second layer 117b.

The first layer 117a and the third layer 117c may be formed of the same metal, and the second layer 117b may be formed of a metal, which is different from the metal forming the first layer 117a and the third layer 117c.

The first layer 117a and the third layer 117c may be formed of nickel (Ni), for example, and the second layer 117b may be formed of copper (Cu), for example.

The first to third layers 117a, 117b and 117c, for example, may have different thicknesses from one another.

In more detail, the first layer 117a, the second layer 117b and the third layer 117c may have a thickness ratio of 0.8:2:1, for example.

In more detail, for example, the first layer 117a may be 0.8 µm thick, the second layer 117b may be 2.0 µm thick, and the third layer 117c may be 1.0 µm thick.

When the frame 110 is formed of a material with a smaller weight than the stator core 181, a thermal deformation value (thermal expansion and thermal contraction) of the frame 110 may be increased more than that of the stator core 181. Accordingly, there may be caused a difference in the thermal deformation value due to a temperature change between the frame 110 and the stator core 181, which may interfere with a coupling force between the frame 110 and the stator core 181.

An anti-separation unit 120 is provided between the frame 110 and the stator 180, so as to prevent spacing or separation between the frame 110 and the stator core 181, which is caused due to the different thermal deformation values (thermal expansion and thermal contraction) from each other, in response to a temperature change.

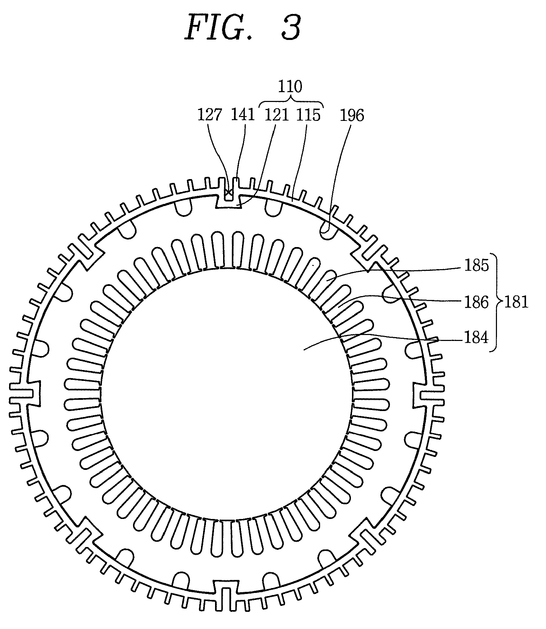

The frame 110 is provided with a plurality of arcuate bases 115 which are arranged along the same circumference with preset intervals, as illustrated in FIG. 3.

The anti-separation unit 120 includes a protruding part 121 provided with anti-circumferential separation portions 123 which extend from ends of the adjacent bases 115 in a radial direction, respectively, and a connecting portion 125 connecting the two adjacent anti-circumferential separation portions 123, and a coupling part 190 coupled with the protruding part 121.

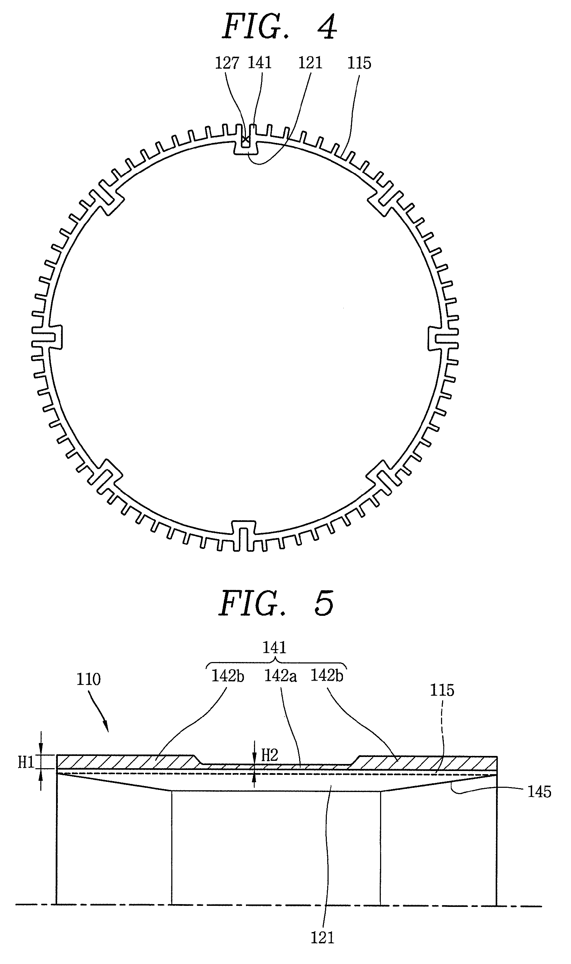

Each anti-circumferential separation portion 123 of the anti-separation unit 120, for example, may be inclined in a radial direction such that a width thereof can increase along its protruding direction, as illustrated in FIG. 5.

The protruding part 121 may inwardly protrude from the frame 110.

The coupling part 190 in which the protruding part 121 is inserted is provided on the stator core 181.

The coupling part 190 may be formed to penetrate through the stator core 181 in an axial direction.

The coupling part 190 may include side walls 192 which come in contact with the anti-circumferential separations 123 of the protruding part 121 in a surface-to-surface contact manner, and a bottom surface 193 connecting the side walls 192.

The side walls 192 of the coupling part 190, as illustrated in FIG. 6, may be formed in such a manner that its inner width gradually increases along a protruding direction.

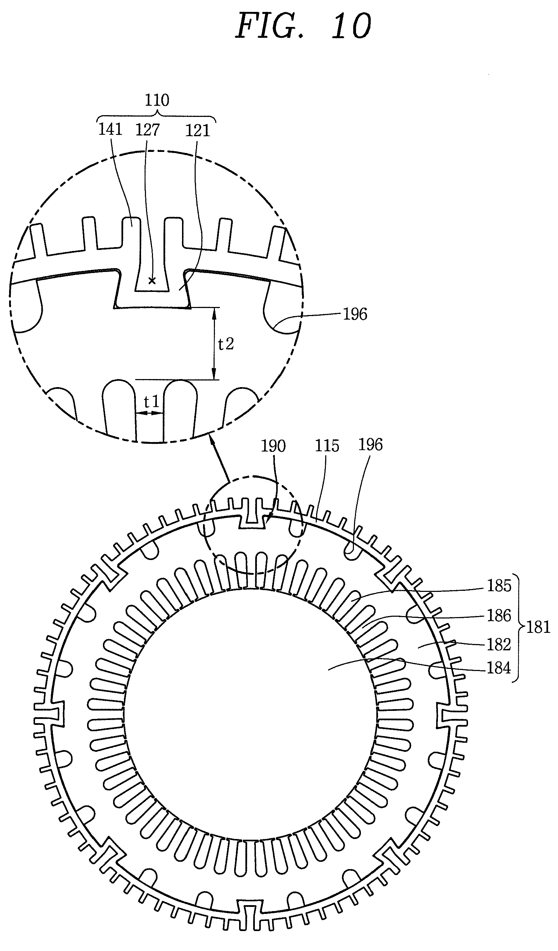

The stator core 181 may be provided with a plurality of cutoff portions 196 (see FIG. 10) cut off from an outer diameter surface thereof. This may allow for reduction of a material used for forming the stator core 181 and a weight of the stator core 181.

The coupling part 190 may be formed by inwardly recessing the outer diameter surface of the stator core 181 along a radial direction.

The coupling part 190, for example, may be formed to penetrate through the stator core 181 along an axial direction.

The coupling part 190 and the protruding part 121 may be configured to prevent the generation of the spacing between the frame 110 and the stator core 181 in such a manner that the anti-circumferential separation portions 123 come in contact with the coupling part 190 of the stator 180 upon a thermal expansion due to a risen temperature, and the connecting portion 125 of the protruding part 121 comes in contact with the coupling part 190 of the stator 180 upon a thermal contraction due to a lowered temperature.

Also, the frame 110 and the stator 180 may be configured in such a manner that a contact area of the protruding part 121 can be increased greater than a contact area of an inner surface of the base 115 when the temperature of the stator 180 increases over a predetermined temperature, and the contact area of the protruding part 121 can be reduced smaller than the contact area of the inner surface of the base 115 when the temperature of the stator 180 is lowered below a predetermined temperature.

Boundary regions between the anti-circumferential separation portions 123 and the connecting portion 125 of the protruding part 121 may be rounded or cut off.

In more detail, the boundary regions between the anti-circumferential separation portions 123 and the connecting portion 125 of the protruding part 121 may be spaced apart from boundary regions between the side walls 192 and the bottom surface 193 of the coupling part 190. Accordingly, lengths of the anti-circumferential separation portions 123 and the connecting portion 125 of the protruding part 121 may be reduced to be smaller than lengths of the side walls 190 and the bottom surface 193 of the coupling part 190, thereby forming an extra space 194. This configuration may prevent deformation of the coupling part 190 due to an excessive increase in contact pressure applied to the coupling part 190 upon the thermal expansion of the anti-circumferential separation portions 123 and the connecting portion 125 of the protruding part 121, which is caused due to an increased temperature.

Here, the protruding part 121 and the coupling part 190 may be configured in such a manner that the generation of the spacing can be prevented by allowing the anti-circumferential separation portions 123 to be contactable with the coupling part 190 of the stator 180 upon the occurrence of the thermal expansion due to the risen temperature. In more detail, upon the thermal expansion, the anti-circumferential separation portions 123 of the protruding part 121 and the side walls 192 of the coupling part 190 may strongly come in contact with each other (be closely adhered onto each other), thereby improving the coupling force between the frame 110 and the stator core 181.

Also, the connecting portion 125 of the protruding part 121 and the bottom surface 193 of the coupling part 190, as illustrated in FIG. 6, may be closely adhered onto each other upon the occurrence of the thermal contraction due to a decreased temperature, improving the coupling force between the frame 110 and the stator core 181.

A buffering space 127 is formed within the protruding part 121.
Accordingly, when the temperature is risen, the bases 115 of the frame 110 may be expanded along the circumferential direction, other than being outwardly expanded along a radial direction. This may prevent an inner diameter surface of the frame 110 from being spaced apart or separated from the outer diameter surface of the stator core 181.

Meanwhile, the frame 110 may be provided with a plurality of ribs 141 which protrude along an outer surface of each base 115 and extend along a lengthwise direction.

Each of the ribs 141, as exemplarily illustrated in FIG. 5, may be configured in such a manner that a height H2 of its central portion 142a can be lower than a height H1 of both end portions 142b so as to prevent an outward deformation. With the configuration, strength of the central portion 142a of the rib 141 may be relatively weaker than strengths of the both end portions 142b. Consequently, the central portion 142a may be more easily elastically deformed than the both end portions 142b.

Some of the ribs 141, for example, may outwardly protrude from ends of the circumferential preventing-portions 123 of the protruding part 121 along a radial direction.

The rib 141 may be configured such that a height h thereof can be greater than a thickness t of the frame 110 (actually, the base 115) and smaller than three times of the thickness 3t of the frame 110 (i.e., t < h < 3t).

The number N of the protruding part 121 may be at least two.

The number N of the protruding part 121 may be smaller than a half (D* π/Wg*2) of a value (D*π/Wg), which is obtained by dividing a circumference (D*π) of the frame 110 by a maximum width Wg of the protruding part 121. Here, D denotes a diameter of the frame 110, and π denotes a circular constant.

A height Hg of the protruding part 121 may be the same as a multiplied value (Hg=Ft*Hf) of a thickness Ft of the base 115 of the frame 110 and a height factor Hf of the protruding part 121. Here, the height factor Hf of the protruding part 121 may be set within the range of 0.5 to 5.0, for example.

In the meantime, when the protruding part 121 is formed inwardly to be inserted into the coupling part 190 of the stator 180, as illustrated in FIG. 10, the coupling part 190 of the stator 180 may be formed at a position on which the interference with a magnetic field is minimized.

Also, the stator core 181 may be configured in such a manner that the shortest distance t2 between the coupling part 190 and the slot 185 is greater than or the same as a width t1 of each tooth 186 (t2 ≥ t1). Accordingly, the flow of magnetic flux may be prevented from being reduced due to the coupling part 190.

The frame 110 may have a length greater than a stacked thickness (i.e., a length in an axial direction) of the stator core 181.

A guide portion 145 may be disposed on an inner surface of the frame 110. The guide portion 145 may be formed in a manner that a height of the protruding part 121 is gradually reduced toward both end portions of the stator core 181.

The guide portion 145 may also be formed on at least one side of the frame 110. This exemplary embodiment illustrates an example that the guide portions 145 are formed on both sides within the frame 110.

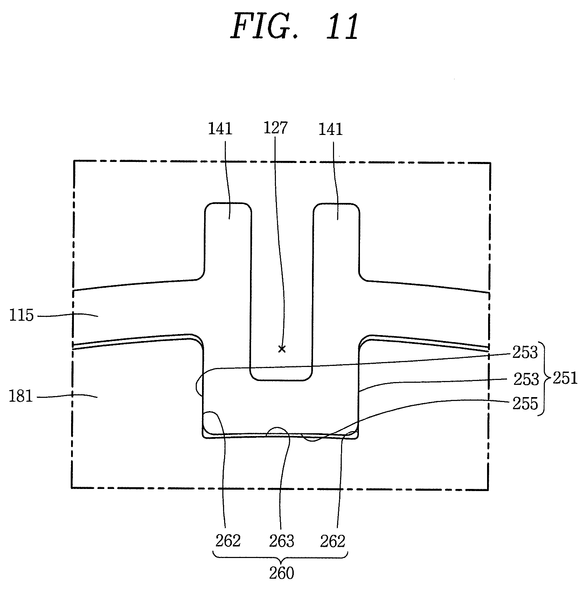

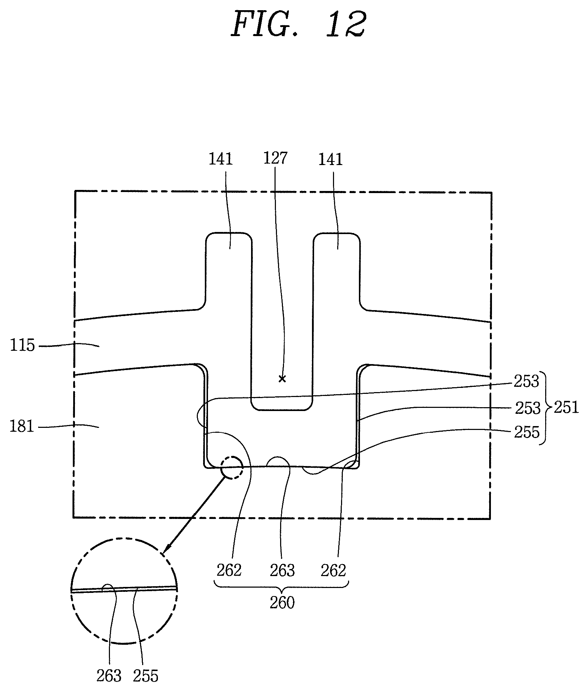

On the other hand, the frame 110, as illustrated in FIGS. 11 and 12, may include a protruding part 251 with a uniform width, and the stator 180 may include a coupling part 260 with a uniform width.

The protruding part 251 may include anti-circumferential separation portions 253 extending from ends of the base 115 in a radial direction, respectively, and a connecting portion 255 connecting the adjacent two anti-circumferential separation portions 253.

The coupling part 260 may be formed to accommodate the protruding part 251 therein.

The coupling part 260 may be formed in a manner of recessing an outer diameter surface of the stator core 181.

The coupling part 260 may include side walls 262 contactable with the anti-circumferential separation portions 253 in a surface-to-surface contact manner, and a bottom surface 263 connecting the side walls 262. With the configuration, upon an increase in temperatures of the frame 110 and the stator core 181, the anti-circumferential separation portions 253 of the protruding part 251 may be expanded to strongly come in contact with the two side walls 262 of the coupling part 260 in the surface-to-surface contact manner, thereby preventing the frame 110 and the stator core 181 from being spaced apart or separated from each other. Upon the thermal expansion, a contact area between the protruding part 251 and the coupling part 260 may be increased to be greater than a contact area between the base 115 and the stator core 181. Consequently, the spacing or separation between the frame 110 and the stator core 181 may be prevented.

Upon a thermal contraction of the frame 110 and the stator core 181, the anti-circumferential separation portions 253 of the protruding part 251 may be spaced apart from the side walls 262 of the coupling part 260, and the connecting portion 255 of the protruding part 251 may be closely adhered onto the bottom surface 263 of the coupling part 260. When the thermal contraction occurs, a contact area between the base 115 of the frame 110 and the outer diameter surface of the stator core 181 may be increased to be greater than a contact area between the protruding part 251 and the coupling part 260.

With the configuration, the stator 180 can be inserted into the frame 110.

Each protruding part 121 of the frame 110 may be inserted into each coupling part 190 of the stator core 181.

When the stator 180 is inserted into the frame 110, the bracket 130 with the stator supporter 150 may be coupled to one end portion of the frame 110.

The coupling members 155 may be inserted into the coupling member insertion holes 188 formed through the stator core 181, respectively. Each coupling member 155 may be drawn out of the bracket 130 through the corresponding stator supporter 150. The nut 160 may be coupled to the male screw portion 158 of each coupling member 155, such that the stator core 181 can be pressed or closely adhered toward the stator supporter 150.

When the coupling of the stator core 181 is completed, the rotor 210 may be inserted into the stator 180 and the bracket 130 may be coupled to the other end portion of the frame 110. This may prevent a coupling force between the frame 110 and the stator 180 from being lowered along a radial direction and an axial direction. That is, the coupling force in the radial direction may be increased by the coupling between the protruding part 121 and the coupling part 190, and also the coupling force in the axial direction may be increased by the stator supporter 150. Hence, when an external vibration or impact is generated, the stator 180 may be stably supported both in the radial direction and in the axial direction. This may allow a stable maintenance of an air gap between the stator 180 and the rotor 210, resulting in stable maintenance of an output of the electric motor and improved reliability of the electric motor.

Meanwhile, when the stator 180 and the frame 110 are increased in temperature in response to the start of driving thereof, the stator core 181 and the frame 110 may be thermally deformed with different thermal deformation (thermal expansion) values from each other.

That is, the frame 110 may be thermally expanded with a greater thermal deformation value than the stator core 181.

The frame 110 and the stator core 181, as illustrated in FIG. 6, may be prevented from being spaced or separated from each other, by virtue of the surface-to-surface contact between both of the anti-circumferential separation portions 123 of the protruding part 121 and both of the side walls 192 of the coupling part 190. Here, the contact area between the base 115 of the frame 110 and the stator core 181 may be decreased to be smaller than the contact area between the protruding part 121 and the coupling part 190.

As the rib 141 of the frame is formed in a manner that a central region (a coupling region between the protruding part 121 and the coupling part 190) is lower in height than both end regions, the central region of the frame 110 can be prevented from being expanded (deformed) in the radial direction, as compared to the both end regions. That is, the frame 110 may be thermally deformed such that an inner diameter of a central portion thereof (i.e., the central region of the rib 141) can be relatively smaller than inner diameters of both end portions thereof.

On the other hand, in a stopped state of an operation, when an external air temperature is dropped below an extremely low temperature (for example, below minus (-) 20°), the frame 110 and the stator 180 may be thermally deformed with different thermal deformation values (thermal contraction values) from each other.

In more detail, the anti-circumferential separation portions 123 of the protruding part 121 may be spaced from the side walls 192, because of having a higher thermal deformation value (thermally-contracted amount) than the side walls 192 of the coupling part 190.

On the other hand, since the frame 110 is contracted such that its inner diameter is reduced along the radial direction and also contracted more than the stator core 181, the connecting portion 125 of the protruding part 121 may be strongly closely adhered onto the bottom surface 193 of the coupling part 190. This may prevent the spacing or separation between the frame 110 and the stator 180.

Also, since the thermally-contracted amount of the frame 110 is greater than that of the stator core 181, the base 115 of the frame 110 may be strongly adhered onto the outer diameter surface of the stator core 181, thereby improving the coupling force between the frame 110 and the stator core 181.

Upon the thermal contraction of the frame 110 and the stator core 181, the contact area between the base 115 and the stator core 181 may be greater than the contact area between the protruding part 121 and the coupling part 190.

The electric motor according to this exemplary embodiment, as aforementioned, may be configured such that the stator 180 can be stably supported in the radial direction and in the axial direction even when external vibration and impact are generated, so as to stably maintain an air gap between the stator 180 and the rotor 210. Also, even upon the increase or decrease of the temperatures of the stator 180 and the frame 110, the stator 180 can be stably supported by the frame 110, thereby enhancing device reliability.

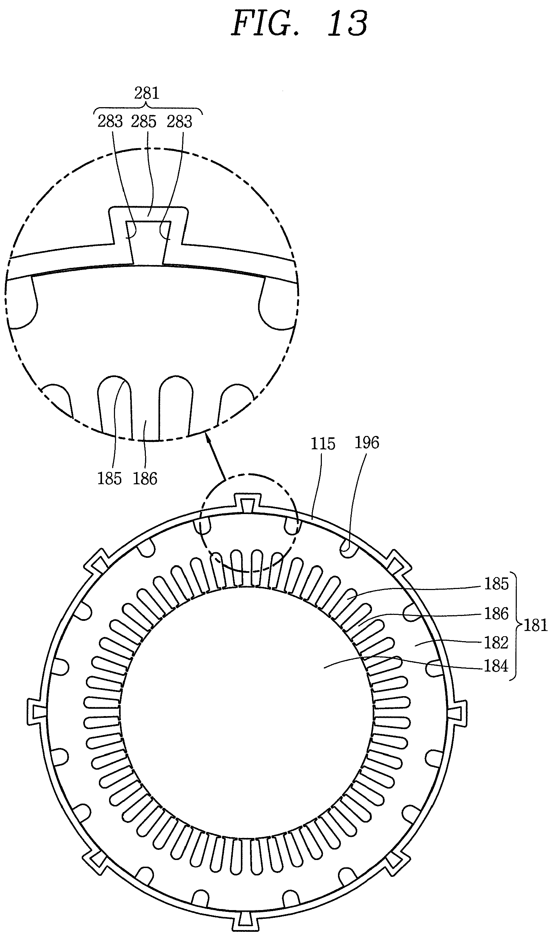

Hereinafter, description will be given of another exemplary embodiment with reference to FIGS. 13 to 16.

The same and equivalent components to those of the foregoing description will have the same reference numerals, and redundant description of some components will be omitted.

As aforementioned, an electric motor according to another exemplary embodiment includes a frame 110, a stator 180 provided with a stator core 181 inserted into the frame 110 in a contacted or coupled state, and a stator coil 201, and a rotor 210 disposed to be rotatable with respect to the stator 180. The frame 110 and the stator core 181 have different thermal expansion coefficients from each other. The frame 110 has a relatively smaller specific gravity and a greater thermal-deformation value than the stator core 181. An anti-separation unit 120 may be disposed between the frame 110 and the stator core 181 to prevent spacing or separation between the frame 110 and the stator core 181 due to different levels of thermal deformation caused by a change of temperature.

The frame 110 includes a plurality of arcuate bases 115 arranged on the same circumference with preset intervals.

The anti-separation unit 120 includes a protruding part 281 provided with anti-circumferential separation portions 283 extending in a radial direction from ends of the bases 115 adjacent to each other, respectively, and a connecting portion 285 connecting the adjacent two anti-circumferential separation portions 283 to each other.

Meanwhile, the protruding part 281 according to this exemplary embodiment, as illustrated in FIG. 13, may outwardly protrude from the frame 110.

Each of the anti-circumferential separation portions 283 of the protruding part 281 may be inclined with respect to a radial direction such that its width can be increased along a protruding direction.

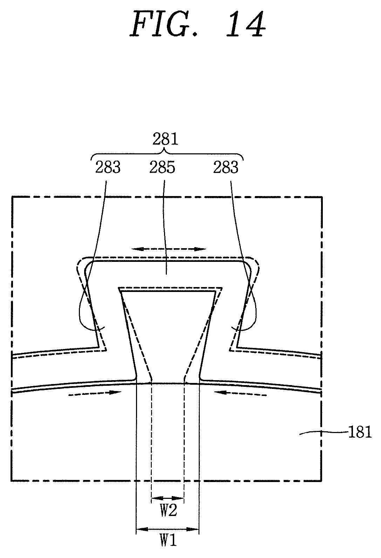

With the configuration, upon an increase in temperature, the frame 110 may be thermally deformed with a greater thermal deformation value than the stator core 181. Here, since the bases 115 of the frame 110 are thermally expanded along a circumferential direction, as illustrated in FIG. 14, an inner width W2 of each boundary region between the anti-circumferential separation portions 283 and the bases 115 after the thermal expansion can be reduced more than an inner width W1 thereof prior to the thermal expansion. Since the connecting portion 285 of the protruding part 281 is expanded in the circumferential direction, the anti-circumferential separation portions 283, as illustrated with doted lines, may be inclined to be close to the base 115. Accordingly, the bases 115 of the frame 110 may be thermally expanded along the circumferential direction and prevented from being outwardly expanded along a radial direction, thereby preventing the frame 110 and the stator core 181 from being spaced or separated from each other.

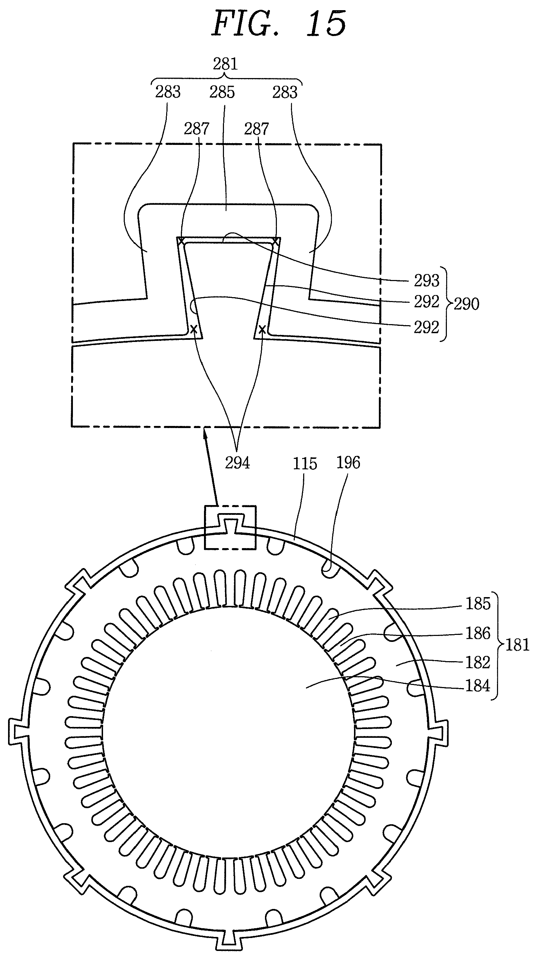

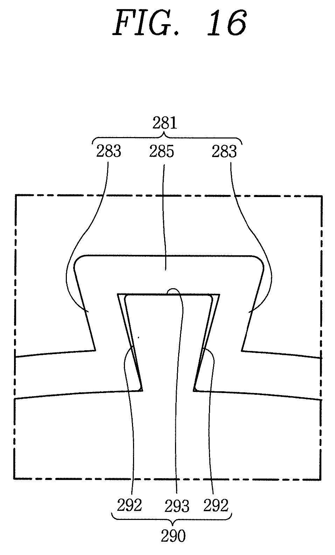

Hereinafter, the another exemplary embodiment will be described with reference to FIGS. 15 and 16.

An electric motor according to this exemplary embodiment, as aforementioned, includes a frame 110, a stator 180 provided with a stator core 181 inserted into the frame 110 in a contacted or coupled state, and a stator coil 201, and a rotor 210 disposed to be rotatable with respect to the stator 180. The frame 110 and the stator core 181 have different thermal expansion coefficients from each other. The frame 110 has a relatively smaller specific gravity and a greater thermal-deformation value than the stator core 181. An anti-separation unit 120 is disposed between the frame 110 and the stator core 181 to prevent spacing or separation between the frame 110 and the stator core 181 due to different levels of thermal deformation caused by a change of temperature.

The frame 110 includes a plurality of arcuate bases 115.

The separation-preventing unit 120 includes a protruding part 281 provided with anti-circumferential separation portions 283 extending in a radial direction from ends of the bases 115 adjacent to each other, respectively, and a connecting portion 285 connecting the adjacent two anti-circumferential separation portions 283 to each other.

Meanwhile, the protruding part 281 according to this exemplary embodiment, as illustrated in FIG. 15, may outwardly protrude from the frame 110.

The protruding part 281 may be inclined with respect to a radial direction such that its width can be increased along the protruding direction.

Each of the anti-circumferential separation portions 283 of the protruding part 281 may be inclined outwardly, respectively, such that its inner width can be expanded.

A coupling part 290 may be formed on the stator 180 such that a part of the stator core 181 is inserted in the protruding part 281.

The coupling part 290, for example, may include side walls 292 contactable with the anti-circumferential separation portions 283 of the protruding part 281, respectively, in a surface-to-surface contact manner, and a connecting end portion 293 connecting the side walls 292.

Here, boundary regions between the two side walls 292 and the connection end portion 293 of the coupling part 290 may be rounded or cut off. Accordingly, upon inserting the coupling part 290 into the protruding part 281, extra spaces 287 may be formed at both sides of the coupling part 290, respectively. The extra space 287 may prevent an inner portion of the protruding part 281 from being damaged and/or deformed due to an excessive contact with the coupling part 290, which is caused by a contraction of the protruding part 281 upon a thermal contraction of the frame 110.

Buffering spaces 294 may be formed between the anti-circumferential separation portions 283 and the side walls 292 of the coupling part 290, respectively.

In more detail, boundary regions between the two side walls 292 of the coupling part 290 and an outer diameter surface of the stator core 182 may be spaced apart from the anti-circumferential separation portions 283.

The buffering spaces 294 may form spaces in which the bases 115 of the frame 110 can be expanded in a circumferential direction upon a thermal expansion of the frame 110. The bases 115 may thusly be expanded along the circumferential direction so as to be prevented from being outwardly spaced apart from the outer diameter surface of the stator core 181.

With the configuration, when temperatures of the frame 110 and the stator 180 are increased during operation, the frame 110 and the stator core 181 may be thermally expanded, respectively. Here, since the buffering spaces 294 are formed at both end regions of the base 115 of the frame 110, the bases 115 may be expanded along a circumferential direction.

Accordingly, the anti-circumferential separation portions 283 of the protruding part 281 may be closely adhered onto the two side walls 292 of the coupling part 290. The frame 110 may thus be prevented from being spaced or separated from the stator core 181.

Meanwhile, when an external air temperature is dropped below a predetermined temperature, the frame 110 and the stator core 181 may be contracted with different thermal deformation values from each other.

The frame 110 may have a greater thermal deformation value (or thermally-contracted amount) than the stator core 181, and thus the bases 115 of the frame 110 may be contracted to be closely adhered onto an outer diameter of the stator core 181.

Also, since the connecting portion 285 of the protruding part 281 is contracted inwardly along the radial direction, thus to be closely adhered onto the connecting end portion 293 of the coupling part 290. Accordingly, when a temperature is dropped, the bases 115 and the connecting portion 285 of the protruding part 281 may be closely adhered onto the outer diameter surface of the stator core 181 and the connecting end portion 293 of the coupling part 290. Consequently, the frame 110 and the stator core 181 may be prevented from being spaced or separated from each other.

As described above, in accordance with one exemplary embodiment disclosed herein, an anti-separation unlit is provided to prevent spacing or separation between a frame and a stator, to ensure strong coupling between the frame and the stator irrespective of a temperature change.

Even if the frame has a smaller specific gravity and a relatively greater thermal deformation value than the stator, the formation of the anti-separation unit may allow for the firm coupling between the frame and the stator, resulting in a weight reduction.

Also, at least one conductive layer may be provided on an outer surface and/or an inner surface of the frame, so as to remove electromagnetic waves by absorbing and shielding the electromagnetic waves and allowing the electromagnetic waves to flow to the ground, thereby preventing a bad affection due to the electromagnetic waves.

In addition, by employing stator supporter between the frame and the stator as well as the anti-separation unit, an air gap between the stator and the rotor can be stably maintained even upon an occurrence of vibration or impact and/or under high temperature and low temperature environments, which may result in enhancement of reliability of the electric motor.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. An electric motor, comprising:
a frame (110);
a stator (180) provided with a stator core (181) inserted into the frame (110) in a contacted or coupled manner, and a stator coil (201); and
a rotor (210) rotatably disposed to be rotatable with respect to the stator(180),
wherein the frame (110) and the stator core (181) have different thermal expansion coefficients from each other, and
the frame(110) has a smaller specific gravity and a greater thermal deformation value than the stator core(181),
wherein an anti-separation unit (120) is provided between the frame (110) and the stator core (181) to prevent the frame (110) and the stator core (181) from being spaced or separated from each other due to different levels of thermal deformation upon a temperature change,
wherein the anti-separation unit includes: a protruding part (121,251,281) provided with anti-circumferential separation portions (123,253,283), and a coupling part (190,260,290) formed on the stator core (181) to be coupled to an outside or an inside of the protruding part (121,251,281); the electric motor being **characterized in that** the frame (110) includes a plurality of arcuate bases (115) which are spaced to be arranged at predetermined intervals on the same circumference and have a cylindrical shape, the anti-circumferential separation portions (123,253,283) extend in a radial direction from ends of the bases (115) adjacent to each other, respectively and are spaced along a circumferential direction to form buffer space (127) therebetween, and the anti-separation unit includes a connecting portion (125,255,285) being spaced along the circumferential direction and connecting ends of the two adjacent anti-circumferential separation portions (123,253,283) along the circumferential direction.

2. The electric motor of claim 1,
wherein the anti-circumferential separation portions (123,253,283) are adhered to the stator core (181) along the circumferential direction in a temperature rise to prevent spacing or separation, and a part of the bases and the protruding part (121,251,281) is adhered to the stator core (181) along the radius direction in a temperature descent to prevent spacing or separation.

3. The electric motor of claim 1, wherein each of the anti-circumferential separation portions (123,253,283) of the anti-separation unit (120) is inclined in the radial direction to have an increased width along a protruding direction, or formed to have a uniform width.

4. The electric motor of claim 3, wherein the protruding part (121,251,281) protrudes from the frame (110) inwardly or outwardly,
wherein the coupling part (190,260) is formed to be recessed on an outer surface of the stator core (181) when the protruding part (121,251) inwardly protrudes from the frame (110), and
wherein the coupling part (290) is formed to protrude on an outer surface of the stator core (181) in such a manner that a part of the stator core (181) is inserted into the protruding part (281) when the protruding part (281) outwardly protrudes from the frame (110).

5. The electric motor of claim 4,
wherein the coupling part (190,260,290) has two side surface parts (192,262,292) being in contactable with the anti-circumferential separation portions (123,253,283) and a bottom surface (193,263) or a connecting end portion (293) to connect the two side surface parts (192,262,292).

6. The electric motor of claim 4, wherein the stator core (181) and the frame (110) are fixed to each other by a contact between the coupling part (190,260,290) and the protruding part (121,251,281) and a contact between an inner surface of the base (115) and a part of an outer surface of the stator core (181),
wherein a contact area between the protruding part (121,251,281) and the coupling part (190,260,290) is increased to be greater than a contact area between the inner surface of the base (115) and the outer surface of the stator core (181) when a temperature of the stator(180) is increased over a predetermined temperature, and
wherein the contact area between the protruding part (121,251,281) and the coupling part (190,260,290) is decreased to be smaller than the contact area between the inner surface of the base (115) and the outer surface of the stator core (181) when a temperature of the stator (180) is decreased below a predetermined temperature.

7. The electric motor of claim 4, wherein the frame (110) comprises a plurality of ribs (141) protruding from an outer surface of the base (115) and extending along a lengthwise direction of the frame (110), and
wherein each rib (141) is formed in a manner that a height of a central portion thereof is lower than those of both sides thereof so as to prevent an outward deformation.

8. The electric motor of claim 7, wherein buffering spaces (127,294) are formed within the protruding part (121,281), and
wherein each of the ribs (141) extends from each anti-circumferential separation portion (123,253) of the protruding part (121,251).

9. The electric motor of claim 7, wherein each of the ribs (141) is formed in the range of being greater than a thickness of the frame (110) and smaller than three times of the thickness.

10. The electric motor of claim 7, wherein the more than two protruding parts (121,251,281) are provided, and the number of the protruding part (121,251,281) is smaller than a half of a value, which is obtained by dividing a circumference of the frame (110) by a maximum width Wg of the protruding part (121,251,281).

11. The electric motor of claim 7, wherein a height Hg of the protruding part (121,251,281) is the same as a multiplied value of a thickness Ft of the base (115) of the frame (110) and a height factor Hf of the protruding part (121,251,281).

12. The electric motor of claim 7, wherein the coupling part (190,260) of the stator (180) is formed on a position with a minimized interference by a magnetic field when the protruding part is formed inwardly to be inserted into the coupling part (190,260) of the stator (180).

13. The electric motor of claim 4, wherein the frame (110) has a length longer than a stacked thickness of the stator core (181), and
wherein a guide portion (145) is formed on an inner surface of the frame (110) in a manner that a protruding height thereof is gradually reduced toward both end portions of the stator core (181).

14. The electric motor of claim 4, wherein the anti-circumferential separation portions (123,283) of the protruding part (121,281) are formed to be inclined or curved with respect to a rotation direction or a counter-rotation direction, and the coupling part (190,290) is formed to be contactable with the anti-circumferential separation portions (123,283) in a surface-to-surface contact manner.

15. The electric motor of any one of claims 1 to 14, wherein brackets (130) are coupled to both end portions of the frame (110), respectively,
wherein at least one stator supporter (150) protrudes from at least one of the brackets (130), to come in contact with an end portion of the stator core (181), and
wherein one side of the stator core (181) is supported by the stator supporter (150) and the other side thereof is supported by a bolt (155) such that the stator core (181) is fixed to an inner side of the frame (110).

16. The electric motor of any one of claims 1 to 14, wherein brackets (130) are coupled to both end portions of the frame (110), respectively, and
wherein at least one stator supporter (170) is provided between at least one of the brackets (130) and the stator core (181) to support one side of the stator core (181), and a bolt (155) is inserted through the bracket (130) and the stator core 181) to support the other side of the stator core (181).

17. The electric motor of any one of claims 1 to 14, wherein brackets (130) are coupled to both end portions of the frame (110), respectively, and
wherein a stator supporter (175) is formed by inwardly protruding from a part of an inner surface of the frame (110) in a stepped manner, wherein one side of the stator core (181) is mounted on the stator supporter (175), and the other side of the stator core (181) is supported by a bolt (155) to be pressed toward the stator supporter (175).

18. The electric motor of any one of claims 1 to 14,
wherein the frame (110) is formed of synthetic resin, and
wherein at least one conductive layer (116) with a predetermined thickness is formed on an inner surface and/or an outer surface of the frame (110).

19. The electric motor of claim 18, wherein the conductive layer (116) has a thickness in the range of 10 nm to 3 mm.

## Patentansprüche

1. Elektromotor, der aufweist:
ein Gehäuse (110);
einen Ständer (180), der mit einem in das Gehäuse (110) auf kontaktierte oder gekoppelte Weise eingeführten Ständerblechpaket (181) und einer Ständerspule (201) versehen ist; und
einen Läufer (210), der so drehbar angeordnet ist, dass er im Hinblick auf den Ständer (180) drehbar ist,
wobei das Gehäuse (110) und das Ständerblechpaket (181) sich voneinander unterscheidende Wärmeausdehnungskoeffizienten haben und
das Gehäuse (110) eine kleinere relative Dichte und einen größeren Wärmeverformungswert als das Ständerblechpaket (181) hat,
wobei eine Trennung verhindernde Einheit (120) zwischen dem Gehäuse (110) und dem Ständerblechpaket (181) vorgesehen ist, um das Gehäuse (110) und das Ständerblechpaket (181) daran zu hindern, infolge von unterschiedlichen Graden von Wärmeverformung bei einer Temperaturänderung voneinander beabstandet oder getrennt zu sein,
wobei die Trennung verhindernde Einheit aufweist: ein Vorsprungteil (121, 251, 281), das mit Umfangstrennung verhindernden Abschnitten (123, 253, 283) versehen ist, und ein Koppelteil (190, 260, 290), das auf dem Ständerblechpaket (181) so gebildet ist, dass es mit einer Außenseite oder einer Innenseite des Vorsprungteils (121, 251, 281) gekoppelt ist; wobei der Elektromotor **dadurch gekennzeichnet ist, dass** das Gehäuse (110) mehrere bogenförmige Basen (115) aufweist, die so beabstandet sind, dass sie in vorbestimmten Intervallen auf demselben Umfang angeordnet sind, und eine zylindrische Form haben, sich die Umfangstrennung verhindernden Abschnitte (123, 253, 283) von zueinander benachbarten Enden der Basen (115) jeweils in Radialrichtung erstrecken und in Umfangsrichtung so beabstandet sind, dass sie einen Pufferraum (127) dazwischen bilden, und die Trennung verhindernde Einheit einen Verbindungsabschnitt (125, 255, 285) aufweist, der in Umfangsrichtung beabstandet ist und Enden der beiden benachbarten Umfangstrennung verhindernden Abschnitte (123, 253, 283) in Umfangsrichtung verbindet.

2. Elektromotor nach Anspruch 1,
wobei die Umfangstrennung verhindernden Abschnitte (123, 253, 283) am Ständerblechpaket (181) bei einem Temperaturanstieg in Umfangsrichtung haften, um Beabstandung oder Trennung zu verhindern, und ein Teil der Basen und das Vorsprungteil (121, 251, 281) am Ständerblechpaket (181) bei einer Temperaturabnahme in Radialrichtung haften, um Beabstandung oder Trennung zu verhindern.

3. Elektromotor nach Anspruch 1,
wobei jeder der Umfangstrennung verhindernden Abschnitte (123, 253, 283) der Trennung verhindernden Einheit (120) in Radialrichtung so geneigt ist, dass er eine zunehmende Breite in Vorsprungrichtung hat, oder so ausgebildet ist, dass er eine gleichmäßige Breite hat.

4. Elektromotor nach Anspruch 3, wobei das Vorsprungteil (121, 251, 281) vom Gehäuse (110) nach innen oder außen vorsteht,
wobei das Koppelteil (190, 260) so ausgebildet ist, dass es auf einer Außenfläche des Ständerblechpakets (181) ausgespart ist, wenn das Vorsprungteil (121, 251) vom Gehäuse (110) nach innen vorsteht, und
wobei das Koppelteil (290) so ausgebildet ist, dass es auf einer Außenfläche des Ständerblechpakets (181) so vorsteht, dass ein Teil des Ständerblechpakets (181) in das Vorsprungteil (281) eingesetzt ist, wenn das Vorsprungteil (281) vom Gehäuse (110) nach außen vorsteht.

5. Elektromotor nach Anspruch 4,
wobei das Koppelteil (190, 260, 290) zwei Seitenflächenteile (192, 262, 292), die mit den Umfangstrennung verhindernden Abschnitten (123, 253, 283) in Kontakt bringbar sind, und eine Bodenfläche (193, 263) oder einen Verbindungsendabschnitt (293) hat, um die beiden Seitenflächenteile (192, 262, 292) zu verbinden.

6. Elektromotor nach Anspruch 4, wobei das Ständerblechpaket (181) und das Gehäuse (110) durch einen Kontakt zwischen dem Koppelteil (190, 260, 290) und dem Vorsprungteil (121, 251, 281) und einen Kontakt zwischen einer Innenfläche der Basis (115) und einem Teil einer Außenfläche des Ständerblechpakets (181) aneinander befestigt sind,
wobei eine Kontaktfläche zwischen dem Vorsprungteil (121, 251, 281) und dem Koppelteil (190, 260, 290) so zunimmt, dass sie größer als eine Kontaktfläche zwischen der Innenfläche der Basis (115) und der Außenfläche des Ständerblechpakets (181) ist, wenn eine Temperatur des Ständers (180) über eine vorbestimmte Temperatur steigt, und
wobei eine Kontaktfläche zwischen dem Vorsprungteil (121, 251, 281) und dem Koppelteil (190, 260, 290) so abnimmt, dass sie kleiner als die Kontaktfläche zwischen der Innenfläche der Basis (115) und der Außenfläche des Ständerblechpakets (181) ist, wenn eine Temperatur des Ständers (180) unter eine vorbestimmte Temperatur fällt.

7. Elektromotor nach Anspruch 4, wobei das Gehäuse (110) mehrere Rippen (141) aufweist, die von einer Außenfläche der Basis (115) vorstehen und sich in Längsrichtung des Gehäuses (110) erstrecken, und
wobei jede Rippe (141) so ausgebildet ist, dass eine Höhe eines Mittelabschnitts davon niedriger als die beider Seiten davon sind, um Auswärtsverformung zu verhindern.

8. Elektromotor nach Anspruch 7, wobei Pufferräume (127, 294) im Vorsprungteil (121, 281) gebildet sind und
wobei sich jede der Rippen (141) von jedem Umfangstrennung verhindernden Abschnitt (123, 253) des Vorsprungteils (121, 251) erstreckt.

9. Elektromotor nach Anspruch 7, wobei jede der Rippen (141) in dem Bereich gebildet ist, der größer als eine Dicke des Gehäuses (110) und kleiner als das Dreifache der Dicke ist.

10. Elektromotor nach Anspruch 7, wobei mehr als zwei Vorsprungteile (121, 251, 281) vorgesehen sind und die Anzahl der Vorsprungteile (121, 251, 281) kleiner als die Hälfte eines Werts ist, den man durch Dividieren eines Umfangs des Gehäuses (110) durch eine maximale Breite Wg des Vorsprungteils (121, 251, 281) erhält.

11. Elektromotor nach Anspruch 7, wobei eine Höhe Hg des Vorsprungteils (121, 251, 281) gleich einem multiplizierten Wert einer Dicke Ft der Basis (115) des Gehäuses (110) und eines Höhenfaktors Hf des Vorsprungteils (121, 251, 281) ist.

12. Elektromotor nach Anspruch 7, wobei das Koppelteil (190, 260) des Ständers (180) an einer Position mit einer minimierten Interferenz durch ein Magnetfeld gebildet ist, wenn das Vorsprungteil nach innen ausgebildet ist, um in das Koppelteil (190, 260) des Ständers (180) eingesetzt zu sein.

13. Elektromotor nach Anspruch 4, wobei das Gehäuse (110) eine größere Länge als eine Stapeldicke des Ständerblechpakets (181) hat und
wobei ein Führungsabschnitt (145) auf einer Innenfläche des Gehäuses (110) so gebildet ist, dass sich eine Vorsprunghöhe davon zu beiden Endabschnitten des Ständerblechpakets (181) allmählich reduziert.

14. Elektromotor nach Anspruch 4, wobei die Umfangstrennung verhindernden Abschnitte (123, 283) des Vorsprungteils (121, 281) so ausgebildet sind, dass sie im Hinblick auf eine Rotationsrichtung oder eine Gegenrotationsrichtung geneigt oder gekrümmt sind, und das Koppelteil (190, 290) so ausgebildet ist, dass es mit den Umfangstrennung verhindernden Abschnitten (123, 283) auf oberflächenkontaktartige Weise in Kontakt bringbar ist.

15. Elektromotor nach einem der Ansprüche 1 bis 14, wobei Halterungen (130) jeweils mit beiden Endabschnitten des Gehäuses (110) gekoppelt sind,
wobei mindestens eine Ständerstütze (150) von mindestens einer der Halterungen (130) so vorsteht, dass sie mit einem Endabschnitt des Ständerblechpakets (181) in Kontakt kommt, und
wobei eine Seite des Ständerblechpakets (181) durch die Ständerstütze (150) gestützt wird und die andere Seite davon durch einen Bolzen (155) gestützt wird, so dass das Ständerblechpaket (181) an einer Innenseite des Gehäuses (110) befestigt ist.

16. Elektromotor nach einem der Ansprüche 1 bis 14, wobei Halterungen (130) jeweils mit beiden Endabschnitten des Gehäuses (110) gekoppelt sind und
wobei mindestens eine Ständerstütze (170) zwischen mindestens einer der Halterungen (130) und dem Ständerblechpaket (181) vorgesehen ist, um eine Seite des Ständerblechpakets (181) zu stützen, und ein Bolzen (155) durch die Halterung (130) und das Ständerblechpaket (181) eingesetzt ist, um die andere Seite des Ständerblechpakets (181) zu stützen.

17. Elektromotor nach einem der Ansprüche 1 bis 14, wobei Halterungen (130) jeweils mit beiden Endabschnitten des Gehäuses (110) gekoppelt sind und
wobei eine Ständerstütze (175) gebildet ist, indem sie von einem Teil einer Innenfläche des Gehäuses (110) stufenartig nach innen vorsteht, wobei eine Seite des Ständerblechpakets (181) an der Ständerstütze (175) angebaut ist und die andere
Seite des Ständerblechpakets (181) durch einen Bolzen (155) so gestützt wird, dass sie zur Ständerstütze (175) gedrückt ist.

18. Elektromotor nach einem der Ansprüche 1 bis 14,
wobei das Gehäuse (110) aus Kunstharz gebildet ist und
wobei mindestens eine leitende Schicht (116) mit einer vorbestimmten Dicke auf einer Innenfläche und/oder einer Außenfläche des Gehäuses (110) gebildet ist.

19. Elektromotor nach Anspruch 18, wobei die leitende Schicht (116) eine Dicke im Bereich von 10 nm bis 3 mm hat.

## Revendications

1. Moteur électrique comprenant :
un bâti (110) ;
un stator (180) pourvu d'un coeur de stator (181) inséré dans le bâti (110) par contact ou couplage et un enroulement de stator (201) ; et
un rotor (210) disposé de manière rotative pour pouvoir tourner par rapport au stator (180) ;
dans lequel le bâti (110) et le coeur de stator (181) ont des coefficients de dilatation thermique différents l'un de l'autre, et
le bâti (110) a un poids spécifique plus faible et une valeur de déformation thermique plus élevée que le coeur de stator (181),
dans lequel une unité anti-séparation (120) est fournie entre le bâti (110) et le coeur de stator (181) pour empêcher le bâti (110) et le coeur de stator (181) d'être espacés ou séparés l'un de l'autre en raison de différents niveaux de dilatation thermique lors d'un changement de température, dans lequel l'unité anti-séparation comprend une partie saillante (121, 251, 281) pourvue de parties anti-séparation circonférentielle (123, 253, 283) et une partie de couplage (1902, 260, 290) formée sur le coeur de stator (181) à coupler à l'extérieur ou à l'intérieur de la partie saillante (121, 251, 281) ; le moteur électrique étant **caractérisé en ce que** le bâti (110) comprend une pluralité de bases arquées (115) qui sont espacées pour être agencées à intervalles prédéterminés sur la même circonférence et ont une forme cylindrique, les parties anti-séparation circonférentielle (123, 253, 283) s'étendent dans une direction radiale depuis les extrémités des bases (115) adjacentes l'une à l'autre, respectivement, et sont espacées le long d'une direction circonférentielle pour former entre elles un espace tampon (127), et l'unité anti-séparation comprend une partie de raccordement (125, 255, 285) espacée le long de la direction circonférentielle et des extrémités de raccordement des deux parties anti-séparation circonférentielle adjacentes (123, 253, 283) le long de la direction circonférentielle.

2. Moteur électrique selon la revendication 1,
dans lequel les parties anti-séparation circonférentielle (123, 253, 283) sont collées au coeur de stator (181) le long de la direction circonférentielle lors d'une augmentation de température pour empêcher l'espacement ou la séparation et une partie des bases et la partie saillante (121, 251, 281) sont collées au coeur de stator (181) le long de la direction radiale lors d'une chute de température pour empêcher l'espacement ou la séparation.

3. Moteur électrique selon la revendication 1, dans lequel chacune des parties anti-séparation circonférentielle (123, 253, 283) de l'unité anti-séparation (120) est inclinée dans la direction radiale pour avoir une plus grande largeur le long d'une direction saillante ou est formée pour avoir une largeur uniforme.

4. Moteur électrique selon la revendication 3, dans lequel la partie saillante (121, 251, 281) fait saillie du bâti (110) vers l'intérieur ou l'extérieur,
dans lequel la partie de couplage (190, 260) est formée pour être évidée sur une surface externe du coeur de stator (181) lorsque la partie saillante (121, 251) fait saillie vers l'intérieur du bâti (110) et
dans lequel la partie de couplage (290) est formée pour faire saillie sur une surface externe du coeur de stator (181) de manière qu'une partie du coeur de stator (181) soit insérée dans la partie saillante (281) lorsque la partie saillante (281) fait saillie vers l'extérieur du bâti (110).

5. Moteur électrique selon la revendication 4,
dans lequel la partie de couplage (190, 260, 290) a deux parties de surface latérales (192, 262, 292) qui sont en contact avec les parties anti-séparation circonférentielle (123, 253, 283) et une surface inférieure (193, 263) ou une partie d'extrémité de raccordement (293) pour raccorder les deux parties de surface latérales (192, 262, 292).

6. Moteur électrique selon la revendication 4, dans lequel le coeur de stator (181) et le bâti (110) sont fixés l'un à l'autre par un contact entre la partie de couplage (190, 260, 290) et la partie saillante (121, 251, 281) et un contact entre une surface interne de la base (115) et une partie d'une surface externe du coeur de stator (181),
dans lequel une surface de contact entre la partie saillante (121, 251, 281) et la partie de couplage (190, 260, 290) est accrue pour être supérieure à une surface de contact entre la surface interne de la base (115) et la surface externe du coeur de stator (181) lorsque la température du stator (180) est augmentée au-dessus d'une température prédéterminée, et
dans lequel la surface de contact entre la partie saillante (121, 251, 281) et la partie de couplage (190, 260, 290) est réduite pour être plus petite que la surface de contact entre la surface interne de la base (115) et la surface externe du coeur de stator (181) lorsque la température du stator (180) est réduite en dessous d'une température prédéterminée.

7. Moteur électrique selon la revendication 4, dans lequel le bâti (110) comprend une pluralité de nervures (141) saillant de la surface externe de la base (115) et s'étendant dans la direction longitudinale du bâti (110) et
dans lequel chaque nervure (141) est formée de manière que la hauteur de sa partie centrale soit inférieure à celles de ses deux côtés pour empêcher une déformation vers l'extérieur.

8. Moteur électrique selon la revendication 7, dans lequel des espaces tampons (127, 294) sont formés dans la partie saillante (121, 281) et
dans lequel chacune des nervures (141) s'étend de chaque partie anti-séparation circonférentielle (123, 253) de la partie saillante (121, 251).

9. Moteur électrique selon la revendication 7, dans lequel chacune des nervures (141) est formée dans la plage où elle est supérieure à une épaisseur du bâti (110) et inférieure à trois fois son épaisseur.

10. Moteur électrique selon la revendication 7, dans lequel plus de deux parties saillantes (121, 251, 281) sont fournies, et le nombre de parties saillantes (121, 251, 281) est plus petit que la moitié d'une valeur qui est obtenue en divisant la circonférence du bâti (110) par une largeur maximale Wg de la partie saillante (121, 251,281).

11. Moteur électrique selon la revendication 7, dans lequel une hauteur Hg de la partie saillante (121, 251, 281) est la même qu'une valeur multipliée d'une épaisseur Ft de la base (115) du bâti (110) et un facteur de hauteur Hf de la partie saillante (121, 251,281).

12. Moteur électrique selon la revendication 7, dans lequel la partie de couplage (190, 260) du stator (180) est formée dans une position avec une interférence minimisée par un champ magnétique lorsque la partie saillante est formée à l'intérieur pour être insérée dans la partie de couplage (190, 260) du stator (180).

13. Moteur électrique selon la revendication 4, dans lequel le bâti (110) a une longueur supérieure à l'épaisseur empilée du coeur de stator (181) et
dans lequel une partie de guidage (145) est formée sur une surface interne du bâti (110) de manière que sa hauteur saillante soit graduellement réduite vers les deux parties d'extrémité du coeur de stator (181).

14. Moteur électrique selon la revendication 4, dans lequel les parties anti-séparation circonférentielle (123, 283) de la partie saillante (121, 281) sont formées pour être inclinées ou incurvées par rapport à une direction de rotation ou à une direction de contre-rotation, et la partie de couplage (190, 290) est formée pour venir en contact avec les parties anti-séparation circonférentielle (123, 283) en mode de contact surface contre surface.

15. Moteur électrique selon l'une quelconque des revendications 1 à 14, dans lequel des potences (130) sont couplées aux deux parties d'extrémité du bâti (110), respectivement,
dans lequel au moins un support de stator (150) fait saillie d'au moins l'une des potences (130) pour venir en contact avec une partie d'extrémité du coeur de stator (181) et
dans lequel un côté du coeur de stator (181) est supporté par le support de stator (150) et son autre côté est supporté par un boulon (155) de sorte que le coeur de stator (181) soit fixé à un côté interne du bâti (110).

16. Moteur électrique selon l'une quelconque des revendications 1 à 14, dans lequel des potences (130) sont couplées aux deux parties d'extrémité du bâti (110), respectivement, et
dans lequel au moins un support de stator (170) est fourni entre au moins l'une des potences (130) et le coeur de stator (181) pour supporter un côté du coeur de stator (181) et un boulon (155) est inséré à travers la potence (130) et le coeur de stator (181) pour supporter l'autre côté du coeur de stator (181).

17. Moteur électrique selon l'une quelconque des revendications 1 à 14, dans lequel des potences (130) sont couplées aux deux parties d'extrémité du bâti (110), respectivement, et
dans lequel un support de stator (175) est formé en faisant saillie vers l'intérieur d'une partie de la surface interne du bâti (110) de manière étagée, dans lequel un côté du coeur de stator (181) est monté sur le support de stator (175) et l'autre côté du coeur de stator (181) est supporté par un boulon (155) à presser vers le support de stator (175).

18. Moteur électrique selon l'une quelconque des revendications 1 à 14,
dans lequel le bâti (110) est formé d'une résine synthétique et
dans lequel au moins une couche conductrice (116) d'une épaisseur prédéterminée est formée sur une surface interne et/ou une surface externe du bâti (110).

19. Moteur électrique selon la revendication 18, dans lequel la couche conductrice (116) a une épaisseur dans la plage de 10 nm à 3 mm.
